# EUROPÄISCHE PATENTSCHRIFT

(11) **EP 0 386 326 B1**
(45) Veröffentlichungstag und Bekanntmachung des Hinweises auf die Patenterteilung: **12.05.1993**
(21) Anmeldenummer: 89122097.2
(22) Anmeldetag: 30.11.1989
(51) Int. Cl.: F16N 27/00, F16N 29/02

(54) **Volumenstrom-Kontrollsystem für Schmieranlagen**
Flow control system for lubrication devices
Système de commande de débit pour dispositifs de graissage

(30) Priorität: 09.03.1989 DE 3907631
(43) Veröffentlichungstag der Anmeldung: 12.09.1990
(73) Patentinhaber: HYDAC TECHNOLOGY GMBH, D-66280 Sulzbach (DE)
(72) Erfinder: Scheuber, Harald R., Dipl.-Ing., D-6823 Neulussheim (DE); Dyroff, Walter, D-4837 Verl 1 (DE); Walker, Robert M., D-6603 Dudenweiler (DE)
(74) Vertreter: Patentanwälte Bartels und Partner

(56) Entgegenhaltungen:
- DE-A- 2 016 316
- DE-A- 2 216 382
- DE-A- 3 637 851
- FR-A- 853 746
- US-A- 4 359 064
- US-A- 4 399 836

## Beschreibung

Die Erfindung betrifft ein Volumenstrom-Kontrollsystem, bei dem Geräte, die in Form von Modulen ausgebildet sind, zu einer Baueinheit zusammengefasst sind.

Es ist bekannt, mit Hilfe eines Zweiwege-Stromregelventils den Schmierstoffstrom von einer Druckquelle zum Verbraucher oder den Verbrauchern in einem weiten Bereich druck- und temperaturunabhängig konstant zu halten. Für viele Anwendungsgebiete sind jedoch diese bekannten Stromregelventile nicht ausreichend. Zumindest ist es aufwendig, das Stromregelventil an die Erfordernisse anzupassen.

Aus der US-A-4 399 836 ist es auch bekannt, für die Steuerung der Kühlwasserzufuhr zu mehreren zu Kühlenden Bereichen eine entsprechende Anzahl von Ventileinheiten in Form von Modulen gleicher Art vorzusehen, die zusammen mit einem gemeinsamen Kühlwasser-Zuführrohr eine Baueinheit bilden.

Der Erfindung liegt die Aufgabe zugrunde, ein Volumenstrom-Kontrollsystem zu schaffen, das problemlos an die bei Schmieranlagen gestellten und sich gegebenenfalls auch ändernden Forderungen angepaßt werden kann. Diese Aufgabe löst ein Volumenstrom-Kontrollsystem mit den Merkmalen des Anspruches 1.

Dadurch, daß das System Module unterschiedlicher Funktion umfaßt, die in beliebiger Kombination zu einer Baueinheit vereinigbar sind, brauchen nur diejenigen Module kombiniert zu werden, welche erforderlich sind, um die gestellten Anforderungen erfüllen zu können. Ein weiterer, wesentlicher Vorteil besteht darin, daß durch einen Austausch von Modulen, eine Wegnahme oder eine Hinzufügung die Leistungsfähigkeit und Funktionsfähigkeit der Baueinheit im Bedarfsfalle problemlos geändert werden kann. Man kann deshalb auch beispielsweise die Anlage später auf einen höheren Standard umrüsten.

Ein aus standardisierten, modularen Ventilelementen aufbaubares System, wie es in der DE-A-2 216 382 aufgezeigt ist, ermöglicht eine Steuerung hydraulischer Arbeitsmedien in Versorgungsleitungen, die vom System zu Arbeitszylindern führen. Für die Volumenstromkontrolle bei Schmieranlagen ist dieses System nicht geeignet.

Beim erfindungsgemäßen System handelt es sich bei den Modulen, die in jeder Modulkombination zusätzlich zu einem Volumenstromzähler vorhanden sind, um Zweiwege-Stromregelventile mit unterschiedlichen Fähigkeiten und/oder um Filter. Das Kontrollsystem kann deshalb beispielsweise mit oder ohne Steuerung sowie mit oder ohne analoge oder digitale Meßwerterfassung oder als Einzel- und Mehrstellenregelkreis ausgeführt werden. Bei einer Meßwerterfassung kommen nicht nur die für eine Regelung oder Steuerung notwendigen Meßwerte in Frage. Es ist auch eine Drucküberwachung möglich, wobei sowohl eine ständige Erfassung als auch eine Erfassung von Zeit zu Zeit gewählt werden kann. Diese Meßwerterfassung ist selbstverständlich auch durch den Prozessor einer Maschine möglich. Schließlich kann über die Volumenstromkontrolle eine manuelle oder automatische Blendenänderung vorgesehen werden, wobei diese Änderung wahlweise stufenweise oder auch kontinuierlich erfolgen kann, und zwar in Form einer Steuerung oder einer Regelung. Der zugehörige Steuer- oder Regelkreis kann so ausgebildet sein, daß eine oder mehrere Blenden, im letztgenannten Falle z.B. in multiplexer Art, gesteuert oder geregelt werden können.

Das Filter ist vorzugsweise austauschbar in einen Block integriert, welcher die für den Austausch notwendigen Elemente enthält, insbesondere einen verschließbaren und freigebbaren Bypass sowie einen Zweiwegehahn. Das Filter kann dann ausgetauscht werden, ohne den Schmierbetrieb unterbrechen zu müssen.

Es ist möglich, die Module so auszubilden, daß sie in der gewünschten Kombination unmittelbar miteinander verbunden werden können. Bei einer bevorzugten Ausführungsform ist jedoch eine Anschlußplatte vorgesehen, welche nicht nur als Träger für die Module dient, sondern auch die erforderlichen Anschlüsse aufweist, so daß die Verbindungen der Module mit den Zu- und Ableitungen sowie die Verbindungen untereinander durch die Montage auf der Anschlußplatte hergestellt werden können. Es ist allerdings nicht erforderlich, daß jeder vorzusehende Modul auf der Anschlußplatte aufliegt. Vielmehr können die Module auch übereinander gestapelt sein, weshalb sie vorzugsweise ein blockförmiges Gehäuse haben. Selbstverständlich müssen im Falle einer Stapelung diejenigen Module, welche nicht direkt an der Anschlußplatte anliegen, über Kanäle, welche in den dazwischenliegenden Modulen vorzusehen sind mit dieser verbunden werden. Alle Module können auch an dafür vorgesehene Kontaktflächen von Maschinen, Baugruppen u.s.w. montiert und kombiniert werden.

Im folgenden ist die Erfindung anhand eines in der Zeichnung dargestellten Ausführungsbeispiels im einzelnen erläutert. Es zeigen:
- Fig. 1: eine Seitenansicht einer aus verschiedenen Modulen gebildeten Baueinheit,
- Fig. 2: eine Draufsicht auf die Baueinheit gemäß Fig.1,
- Fig. 3: eine Draufsicht auf die Anschlußplatte der Baueinheit gemäß den Fig.1 und 2,
- Fig. 4: das Schaltbild des Filterblockes der Baueinheit gemäß den Fig.1 und 2,
- Fig. 5: eine Draufsicht auf einen der beiden in der Baueinheit enthaltenen Volumenstromzähler,
- Fig. 6: eine Stirnansicht des Volumenstromzählers gemäß Fig.5
- Fig. 7: das Schaltbild des Volumenstromzählers gemäß den Fig.5 und 6,
- Fig. 8: ein Schaltbild eines Zweiwege-Stromregelventils mit austauschbarer Meßblende,
- Fig. 9: ein Schaltbild eines Zweiwege-Stromregelventils des Systems mit manuell kontinuierlich verstellbarer Meßblende,
- Fig.10: ein Schaltbild eines Zweiwege-Stromregelventils des Systems mit motorisch stufenförmig verstellbarer Meßblende,
- Fig.11: ein Schaltbild eines Zweiwege-Stromregelventils des Systems mit motorisch stufenlos veränderbarer Meßblende,
- Fig.12: eine Draufsicht auf die Unterseite eines Zweiwege-Stromregelventils mit austauschbarer Meßblende,
- Fig.13: eine Ansicht von unten eines Zweiwege-Stromregelventils mit manuell stufenlos verstellbarer Meßblende und mit Meßanschluß,
- Fig.14: eine Draufsicht auf ein Zweiwege-Stromregelventil mit motorisch verstellbarer Meßblende und Meßanschluß.
- Fig.15: eine teils in Seitenansicht und teils im Längsschnitt dargestellte weitere Variante des Zweiwege-Stromregelventils gemäß Fig.11 in vergrößertem Maßstab und mit integriertem Meßsystem.
- Fig. 16.: ein Schaltbild eines Zweiwege-Stromregelventils des System mit manuell kontinuierlich verstellbarer Meßblende und einer zu dieser parallelgeschalteten Festblende,
- Fig. 17: ein Schaltbild eines Zweiwege-Stromregelventils des Systems mit manuell kontinuierlich verstellbarer Meßblende und einer in diese integrierten Festblende,
- Fig. 18: ein Schaltbild eines Zweiwege-Stromregelventils des Systems mit motorisch stufenlos veränderbarer Meßblende und einer zu dieser parallelgeschalteten Festblende,
- Fig. 19: ein Schaltbild eines Zweiwege-Stromregelventils des Systems mit motorisch stufenlos veränderbarer Meßblende und einer in diese integrierten Festblende.

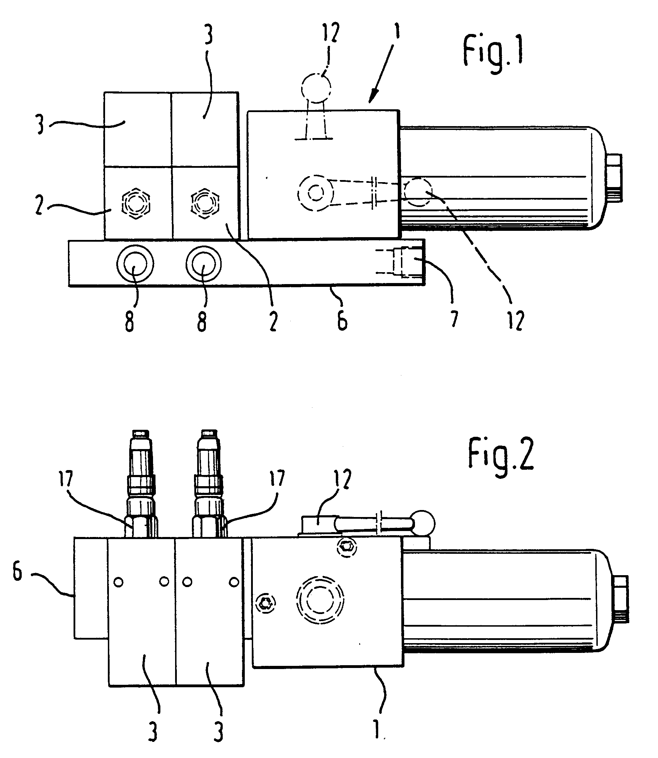

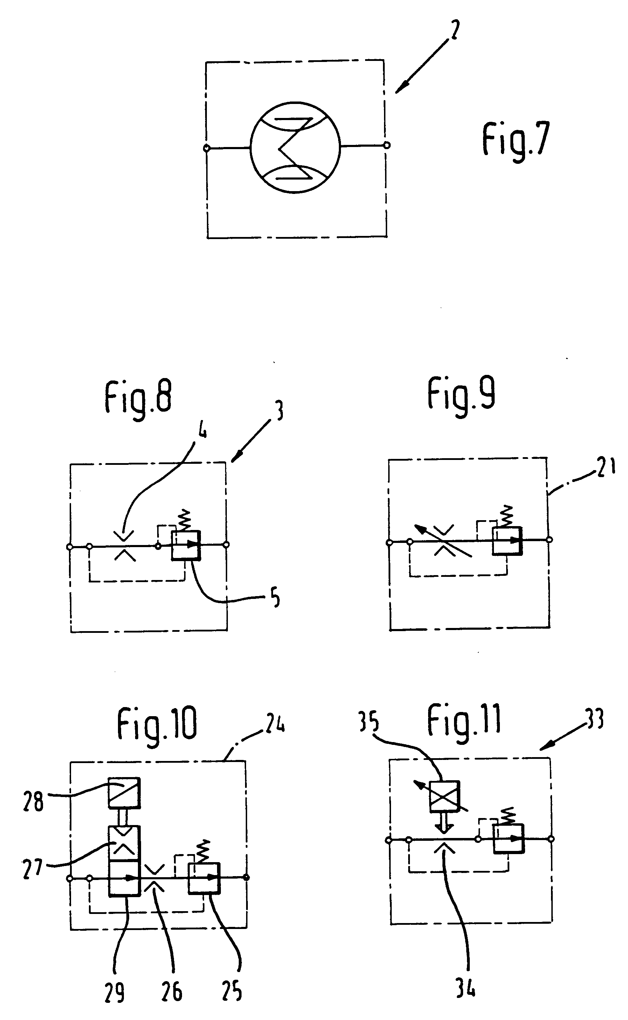

Aus den Modulen, die das erfindungsgemäße System umfaßt, sind bei dem in den Fig.1 und 2 dargestellten Ausführungsbeispielen ein Filterblock 1, zwei gleich ausgebildete Volumenstromzähler 2 sowie zwei ebenfalls gleich ausgebildete Zweiwege-Stromregelventile 3 ausgewählt, bei denen es sich um solche mit austauschbarer Meßblende 4 handelt. Wie Fig.8 zeigt, ist bei diesen Zweiwege-Stromregelventilen 3 der Meßblende 4 in bekannter Weise eine Regelblende 5 in Form einer Druckwaage mit Regelkolben nachgeschaltet, bei der die Stellung des Regelkolbens abhängig ist von der Größe des Schmiermediumdruckes vor und nach der Meßblende 4.

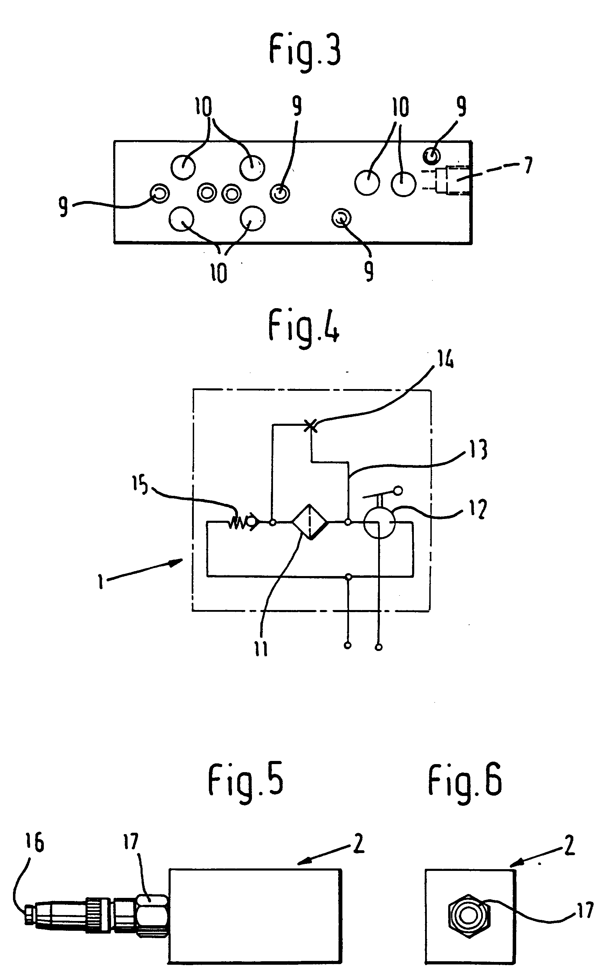

Wie vor allem Fig.1 zeigt, sind der Filterblock 1 und die beiden Volumenstromzähler 2 nebeneinander auf einer Anschlußplatte 6 montiert, welche mit einer Anschlußbohrung 7, über welche die Verbindung zu einer Förderpumpe hergestellt wird, sowie mit Anschlußbohrungen 8 versehen ist, an denen die zu den Schmierstellen führenden Leitungen angeschlossen werden. Wie Fig.3 zeigt, ist die Anschlußplatte 6 nicht nur mt Gewindebohrungen 9 versehen, welche es gestatten, die Module mit der Anschlußlatte 6 zu verschrauben. Sie weist auch Kanäle 10 auf, welche mit der Anschlußbohrung 7 bzw. den Anschlußbohrungen 8 in Verbindung stehen. Auf diese Kanäle 10 sind die Anschlußbohrungen der Module ausgerichtet. Daher braucht zur Herstellung der Verbindung zwischen den Kanälen und den Anschlußbohrungen der Module nur die mechanische Verbindung zwischen letzteren und der Anschlußplatte 6 hergestellt zu werden.

Der Filterblock 1 enthält, wie Fig.4 zeigt, außer dem auswechselbaren Filter 11 vor diesem einen manuell betätigbaren Dreiwegehahn 12, einen Bypass 13, in dem ein Absperrventil 14 liegt, sowie ein dem Filter 11 und dem Bypass 13 nachgeschaltetes Rückschlagventil 15. Es ist deshalb möglich, das Filter auszutauschen, ohne die Schmiermittelversorgung unterbrechen zu müssen. Die in Fig.4 rechts dargestellte Zuleitung des Filterblockes 1 ist bei der Baueinheit gemäß den Fig.1 und 2 mit der Abschlußbohrung 7 verbunden. Das Schmiermedium durchströmt deshalb zunächst das Filter, ehe es zu den beiden nachgeordneten, parallelgeschalteten Volumenstromzählern 2 gelangt. Diese werden von den beiden parallelen Schmiermediumströmen durchströmt. Die Meßwerte, welche die Volumenstromzähler 2 liefern, werden über je eine Meßleitung 16 abgenommen, die über einen an der einen Stirnseite des Moduls vorgesehenen Schraubanschluß 17 mit dem Modul verbunden sind.

Alle Volumenstromzähler 2 und Zweiwege-Stromregelventile 3 haben die gleiche, in Fig.6 dargestellte, quadratische Querschnittsform und -größe. Sie können deshalb in der in Fig.1 dargestellten Weise sowohl nebeneinander als auch übereinander angeordnet werden. Damit jedes Zweiwege-Stromregelventil 3 dann, wenn ein Volumenstromzähler 2 vorgeschaltet ist, auf letzteren aufgesetzt werden kann, wie dies die Fig.1 und 2 zeigen, sind die Volumenstromzähler 2 mit nicht dargestellten Verbindungsbohrungen versehen, welche den Schmiermediumstrom vom Volumenstromzähler 2 zum nachgeschalteten Zweiwege-Stromregelventil 3 und von diesem wieder zurück zur Anschlußplatte 6 führen. Diese Verbindungsbohrungen und die Anschlußbohrungen der Zweiwege-Stromregelventile 3 sind so angeordnet, daß letztere auch direkt auf der Anschlußplatte 6 montiert werden können.

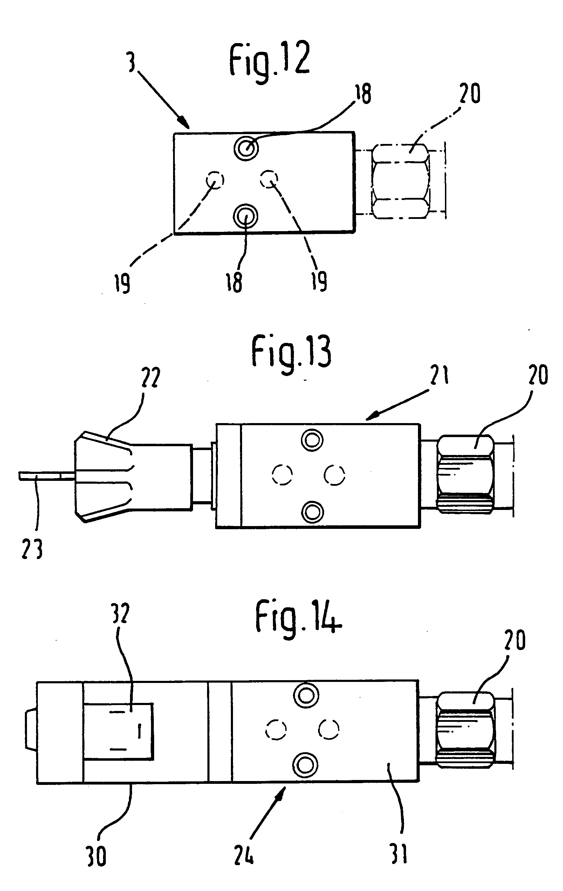

Im Ausführungsbeispiel haben die beiden Zweiwege-Stromregelventile 3 keinen Meßanschluß, an dem Druckmeßwerte abgenommen werden könnten. Wie Fig.12 zeigt, können jedoch die Zweiwege-Stromregelventile 3 außer den Anschlußbohrungen 18 und Bohrungen 19 für die Verschraubung mit dem Volumenstromzähler 2 oder der Anschlußplatte 6 auch einen Schraubanschluß 20 für eine nicht dargestellte Meßleitung aufweisen.

Falls erforderlich, kann statt je eines Zweiwege-Stromregelventiles 3 mit austauschbarer Meßblende auch ein Zweiwege-Stromregelventil 21 gemäß den Fig.9 und 13 verwendet werden, bei dem mittels eines Drehgriffes 22 die Meßblende stufenlos verändert werden kann. Mit Hilfe eines abziehbaren Schlüssels 23 kann der Drehgriff 22 in der gewählten Stellung gesperrt werden, um zu verhindern, daß unbefugt die Einstellung der Meßblende verändert wird. Wie ein Vergleich der Fig.13 und 12 zeigt, haben die Zweiwege-Stromregelventile 21 die gleiche Anordnung der Bohrungen für die hydraulische und mechanische Verbindung mit einem anderen Modul oder der Anschlußplatte. Ferner ist bei dem in Fig.13 dargestellten Ausführungsbeispiel ein Schraubanschluß 20 für eine Meßleitung vorgesehen.

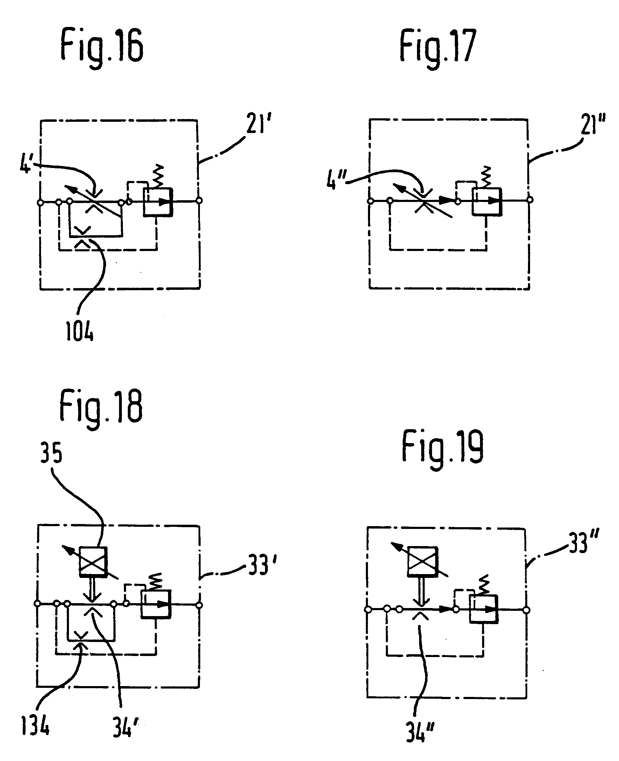

Sofern es erwünscht oder erforderlich ist, daß immer eine bestimmbare Mindestmenge des Fluids durch das Zweiwege-Stromregelventil 21 fließt, sieht man, wie Fig. 16 zeigt, in einem Bypass zur Meßblende 4′ eine Festblende 104 vor. Es ist dann beispielsweise für den Notbetrieb eines Schmiersystems gewährleistet, daß immer eine Mindestmenge an Schmiermittel fließt. Vorzugsweise ist die Festblende 104 austauschbar, damit der Schmiermittelflußdurch den Bypass auf den gewünschten Wert eingestellt werden kann. Wie Fig. 17 zeigt, ist es auch möglich, auf einen Bypass zu verzichten und die Festblende des Zweiwege-Stromregelventils 21˝ in die Meßblende 4˝ zu integrieren, d.h., die Meßblende 4 so auszubilden, daß ihre Öffnung nur bis zu demjenigen Wert verkleinert werden kann, der die gewünschte Mindestmenge ergibt.

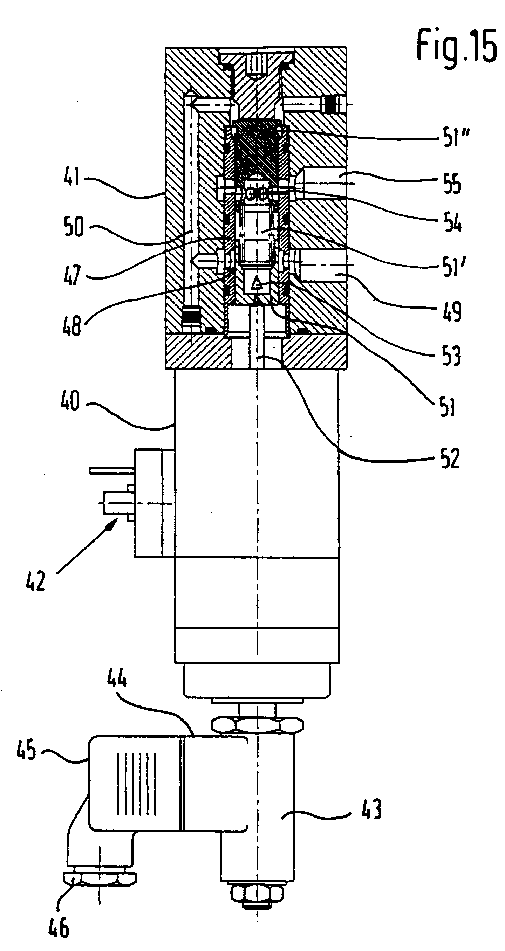

Das Zweiwege-Stromregelventil 24 gemäß den Fig.10 und 14, das ebenfalls als Modul zur Verfügung steht und im Bedarfsfalle in die Baueinheit eingefügt werden kann, weist zusätzlich zu der Regelblende 25 und einer dieser vorgeschalteten, unveränderbaren Meßblende 26 eine zweite, feste Meßblende 27 auf, die mittels eines elektromagnetischen Antriebs 28 statt eines den Schmiermediumstrom nicht behindernden Durchlasses 29 der ersten Meßblende 26 vorgeschaltet werden kann. Da diese zweite Meßblende 27 eine geringere Öffnung hat als die erste Meßblende 26, kann dieses Zweiwege-Stromregelventil 24 motorisch von einer größeren auf eine kleinere Meßblende und umgekehrt umgeschaltet werden. Der elektromagnetische Antrieb 28 ist, wie Fig.14 zeigt, in einem Gehäuseteil 30 angeordnet, der an die einem Schraubanschluß 20 abgekehrte Stirnseite des die Regelblende enthaltenden und Bohrungen für den hydraulischen und mechanischen Anschluß aufweisenden Gehäuseteils 31 angesetzt und mit einer Steckbuchse 32 versehen ist, an welche die Steuerleitungen für den elektromagnetischen Antrieb 28 eingeschlossen werden.

Das in Fig. 11 dargestellte Zweiwege-Stromregelventil 33 unterscheidet sich von dem Zweiwege-Stromregelventil 21 nur dadurch, daß an den die Bohrungen für den hydraulischen und mechanischen Anschluß aufweisenden Gehäuseteil statt des manuellen Antriebes für die stufenlose Verstellung der Meßblende ein elektromagnetischer Antrieb 35 oder ein elektrischer Stellmotor, mit oder ohne Selbsthemmung, angesetzt ist, so daß sich äußerlich dieses Zweiwege-Stromregelventil 33 nicht von dem Zweiwege-Stromregelventil 24 gemäß Fig.14 unterscheidet, sofern der Antrieb 35 oder der Stellmotor nicht mehr Platz benötigen.

Bei dem Zweiwege-Stromregelventil 33 kann man, wie Fig. 18 zeigt, analog zu dem Zweiwege-Stromregelventil 21 parallel zur Meßblende 34′ einen Bypass mit einer Festblende 134 vorsehen. Regelt das Zweiwege-Stromregelventil 33′ beispielsweise einen Schmiermittelstrom, dann kann mit Hilfe der Festblende 134, die vorzugsweise austauschbar ausgebildet ist, um die den Bypass durchströmende Menge auf den gewünschten Wert einstellen zu können, im Notbetrieb sichergestellt werden, daß immer die notwendige Mindestmenge an Schmiermittel fließt. Wie Fig. 19 zeigt, kann man wie bei dem Ausführungsbeispiel gemäß Fig. 17 eine Mindestmenge auch dadurch garantieren, daß man die Festblende des Zweiwege-Stromregelventils 33˝ in die Meßblende 34˝ integriert, d.h., die Meßblende so ausbildet, daß sie nur bis zu dem für die gewünschte Mindestmenge erforderlichen Öffnungswert geschlossen werden kann.

Die in Fig.15 dargestellte Ausführungsform eines Zweiwege-Stromregelventils des Systems mit motorisch stufenlos veränderbarer Meßblende weist in einem ersten Gehäuseteil 41 die kontinuierlich veränderbare Blende auf. In einem an die eine Stirnseite dieses ersten Gehäuseteils 41 anschließenden zweiten Gehäuseteil 40 befindet sich ein Proportionalmagnet oder ein elektrischer Stellmotor. Für den Anschluß des Proportionalmagneten oder des Stellmotors ist seitlich am zweiten Gehäuseteil 40 eine Anschlußvorrichtung 42 vorgesehen. An die dem ersten Gehäuseteil 41 abgekehrte Stirnseite des zweiten Gehäuseteils 40 schließt sich ein Meßsystem 43 zur Bestimmung der Blendenstellung an. Dieses Meßsystem 43 kann entweder für eine analoge oder eine digitale Meßwerterfassung ausgebildet sein. Das Gehäuse des Meßsystems 43 weist seitlich eine Steckbuchse 44 auf, in die ein Stecker 45 eingesetzt ist, der im Ausführungsbeispiel eine integrierter und eine definierte Schnittstelle enthält. Der Verstärker oder Schnittstelle oder Verstärker und Schnittstelle könnten aber auch außerhalb des Steckers 45 vorgesehen sein, der mit einer Verschraubung 46 für das zugehörige Kabel versehen ist.

Der Proportionalmagnet erzeugt eine der Größe des angelegten Signals entsprechende Verschiebung seines Antriebsgliedes. Sofern ein elektrischer Stellmotor Verwendung findet, kann dieser selbsthemmend oder nicht selbsthemmend ausgeführt sein. Der Proportionalmagnet und der nicht selbsthemmende Stellmotor können im Falle eines Ausfalls des Ansteuersignals, beispielsweise in Folge eines Netzausfalles, die Blende nicht in der augenblicklichen Stellung halten. Hierzu ist nur der Stellmotor mit Selbsthemmung in der Lage. Man kann aber für das Steuersignal des Proportionalmagneten und des nicht selbsthemmenden Stellmotors einen Speicher vorsehen, damit nach einem Ausfall der Energieversorgung sofort wieder die ursprüngliche Stellung der Blende eingestellt werden kann.

Wie Fig. 15 zeigt, enthält der erste Gehäuseteil 41 eine Längsbohrung, in die eine Buchse 47 eingesetzt ist. Letztere ist auf ihrer Innenseite in der dem zweiten Gehäuseteil 40 benachbarten Hälfte mit einer Ringnut 48 versehen, die über radiale Bohrungen mit einer Anschlußbohrung 49 bzw. einem Verbindungskanal 50 verbunden ist, der andererseits in die Längsbohrung neben dem dem zweiten Gehäuseteil 40 abgekehrten Ende der Buchse 47 mündet. In der Buchse 47 ist längsverschiebbar ein Kolben 51 gelagert, der mittels des Proportionalmagneten oder Stellmotors verschiebbar ist. Im Ausführungsbeispiel liegt die gegen den zweiten Gehäuseteil 40 weisende Stirnfläche des Kolbens 51 an einem gleichachsig angeordneten Stößel 52 an, welcher vom Proportinalmagneten oder vom Stellmotor in seiner Längsrichtung verschiebbar ist.

Die Mantelfläche des hohlen Kolbens 51 ist nahe dem am Stössel 52 anliegenden Boden mit einem Durchbruch 53 versehen. Wie Fig.15 zeigt, hat der Durchbruch 53 eine Form ähnlich einem gleichschenkligen Dreieck dessen Basis parallel zum Boden des Kolbens 51 liegt und dessen Spitze vom Boden weg weist. Die tatsächliche Form des Durchbruchs 53 weicht von der Dreieckform ab, weil der Durchbruch 53 so gestaltet ist, daß sich eine lineare Abhängigkeit zwischen der Stellung des Kolbens 51 und der Durchflußmenge durch das Stromregelventil erergibt. Damit braucht die Linearisierung nicht im Meßsystem durchgeführt zu werden. Sobald der Durchbruch 53 bei einer Verschiebung des Kolbens 51 weg vom zweiten Gehäuseteil 40 in den Bereich der Ringnut 48 kommt, nimmt deshalb die durch Durchbruch 53 hindurch in das Innere des Kolbens 51 eintretende Schmiermittelmenge linear mit der Verschiebung des Kolbens 51 in der genannten Richtung zu, bis der maximale Blendenwert erreicht ist, bei dem der Durchbruch 53 vollständig von der Ringnut 48 überdeckt ist.

Der Kolben 51 ist im Ausführungsbeispiel dreiteilig Ausgebildet. In dem den Durchbruch 53 enthaltenden Teil ist gleichachsig ein Endabschnitt eines Zapfens 51′ eingesetzt, der mit einer zentralen Sacklochbohrung versehen ist. Letztere ist zum Innenraum des den Durchbruch 53 aufweisenden Teils hin offen. Der andere, im Durchmesser kleinere Endabschnitt des Zapfens 51′ greift in eine zentrale Sacklochbohrung eines als Führungskörpers dienenden Teils 51˝ ein. Der eingreifende Endabschnitt des Zapfens 51′ und der diesen aufnehmende Endabschnitt des als Führungskörpers dienenden Teils 51˝ sind mit über den gesamten Umfang verteilt angeordneten radialen Bohrungen 54 versehen, die in die zentrale Sacklochbohrung des Zapfens 51′ münden. Entsprechend ist die Buchse 47 mit radialen Bohrungen versehen, die in jeder Stellung des Kolbens 51 wenigstens teilweise die radialen Bohrungen des Kolbens überdecken und in eine die Buchse 47 umgebende Ringnut münden, die mit einer Anschlußbohrung 55 des ersten Gehäuseteils 41 direkt verbunden ist. Hierdurch ist sichergestellt, daß das Schmiermittel beim Austritt aus dem Kolben 51 keiner Drosselung ausgesetzt ist.

Generell kann das Zweiwege-Stromregelventil in allen Ausführungsvarianten ohne Druckwaage betrieben werden. Dann werden Funktionen erzeugt, wie sie bei Drosselventilen üblich sind. Die Kombinierfähigkeit aller Module wird dadurch nicht beeinflußt. Ohne Druckwaage ist eine Volumenstromüberwachung mit den geringsten Anforderungen durch einen Volumenstromzähler der niedrigsten Fähigkeitsstufe, also in seiner einfachsten Ausführungsvariante, möglich.

Wird das Zweiwege-Stromregelventil mit Druckwaage betrieben, so ist die vom Fähigkeitsniveau her niedrigste Volumenstromüberwachung aller Varianten durch Abtasten der Druckwaage in Form einer Längenmessung ohne Volumenstromzähler möglich.

Das Volumenstrom-Kontrollsystem ist daher mit allen heute bekannten Regel- oder Steuermethoden zu betreiben, wenn die Regel- oder Steuergeräte entsprechend an das System angepaßt werden. Insbesondere ist es möglich, das System in allen Varianten in größerer Anzahl mit der jeweils geforderten Kombination gleichzeitig zu betreiben. Die obere Grenze der Anzahl der Module wird vom Prozessor bzw. der Steuerung oder Regelung der Gesamtanlage begrenzt und nicht vom System selbst.

Das erfindungsgemäße Volumenstrom-Kontrollsystem kann aber auch generell anderen Verteilersystemen vorgeschaltet oder mit diesen kombiniert werden und/oder mit diesen eine Regel- oder Steuereinheit bilden. Die Zusammenfügung des Volumenstrom-Kontrollsystems mit anderen Verteilersystemen, z. B. Progressivverteilern, Mengenteilern usw. kann in Form einer baulichen Vereinigung erfolgen. Es ist aber selbstverständlich auch möglich, die einzelnen Komponenten räumlich getrennt anzuordnen.

## Patentansprüche

1. Volumenstrom-Kontrollsystem für Flüssigkeiten, bei dem eine wählbare Anzahl von Geräten, die in Form von Modulen (1, 2, 3, 21) ausgebildet und von der Flüssigkeit durchströmbar sind, zu einer Baueinheit zusammengefaßt ist, dadurch gekennzeichnet, daß es für die Kontrolle von Schmiermittelströmen bei Schmieranlagen vorgesehen ist, daß die Baueinheit aus beliebigen Kombinationen mit je mehreren, vom Schmiermittel nacheinander durchströmbaren Modulen (1, 2, 3, 21) unterschiedlicher Funktion aufgebaut ist und daß bei jeder Kombination ein Modul als Volumenstromzähler (2) ausgebildet ist.

2. System nach Anspruch 1, gekennzeichnet durch eine Anschlußplatte (6), welche den Träger für alle ausgewählten Module (1, 2, 3) bildet und die Anschlüsse (7, 8, 10) sowohl für die Zuleitung und Ableitung des Schmiermittels als auch für die Module (1, 2, 3) aufweist.

3. System nach Anspruch 1 oder 2, gekennzeichnet, durch wenigstens einen Modul (3, 21, 24, 33), der als Zweiwege-Stromregelventil ausgebildet ist.

4. System nach einem der Ansprüche 1 bis 3, gekennzeichnet durch wenigstens einen Modul, der als Filterblock (1) ausgebildet ist.

5. System nach einem der Ansprüche 1 bis 4, dadurch gekennzeichnet, daß bei jeder Kombination dem Volumenstromzähler (2), bezogen auf die Richtung des Schmiermittelstromes, zumindest ein weiterer Modul nachgeschaltet ist.

6. System nach einem der Ansprüche 3 bis 5, dadurch gekennzeichnet, daß das Zweiwege-Stromregelventil (3) als ein solches mit austauschbarer Meßblende (4) für eine stufenweise Veränderung des Blendenquerschnittes ausgebildet ist.

7. System nach einem der Ansprüche 3 bis 5, dadurch gekennzeichnet, daß das Zweiwege-Stromregelventil (24) eine stufenweise verstellbare Meßblende enthält.

8. System nach einem der Ansprüche 3 bis 5, dadurch gekennzeichnet, daß das Zweiwege-Stromregelventil (21, 33) eine stufenlos verstellbare Meßblende (34) enthält.

9. System nach einem der Ansprüche 3 bis 8, dadurch gekennzeichnet, daß das Zweiwege-Stromregelventil (21′; 21˝; 33′; 33˝) eine ständig geöffnete Blende (104; 4˝; 134; 34˝) aufweist.

10. System nach Anspruch 9, dadurch gekennzeichnet, daß die ständig geöffnete Blende (104; 134) austauschbar ausausgebildet ist.

11. System nach Anspruch 9 oder 10, dadurch gekennzeichnet, daß die ständig geöffnete Blende in einem Bypass zur Meßblende (4′; 34′) liegt oder in die Meßblende (4˝; 34˝) integriert ist.

12. System nach einem der Ansprüche 7 bis 11, gekennzeichnet durch einen manuellen (22) oder motorischen (28, 35) Verstellantrieb für die Meßblende.

13. System nach einem der Ansprüche 7 bis 12, gekennzeichnet durch ein Meßsystem (43) zur Bestimmung der Blendenstellung.

14. System nach Anspruch 12 oder 13, dadurch gekennzeichnet, daß der motorische Verstellantrieb durch einen Proportionalmagneten oder einen elektrischen Stellmotor gebildet ist.

15. System nach Anspruch 14, dadurch gekennzeichnet, daß der Stellmotor selbsthemmend ausgebildet ist.

16. System nach einem der Ansprüche 8 bis 15, dadurch gekennzeichnet, daß die stufenlos verstellbare Meßblende in einem translatorisch verstellbaren Blendenkörper (51) eine Durchtrittsöffnung (53) mit einer eine lineare Abhängigkeit der Blendengröße vom Verstellweg ergebenden Kontur aufweist.

17. System nach einem der Ansprüche 1 bis 14, dadurch gekennzeichnet, daß die als Zweiwege-Stromregelventile (3, 21, 24, 33) ausgebildeten Module einen Drucksensor und einen Anschluß (20) für eine die Meßwerte übertragende Leitung haben.

## Claims

1. Volumetric flow control system for liquids, in which a selectable number of apparatus, which are constructed in the form of modules (1, 2, 3, 21) and through which liquid may flow, is combined as a basic unit, characterised in that it is provided for controlling lubricant flows in lubricating apparatus, that the basic unit is constructed from any combinations each with a plurality of modules (1, 2, 3, 21) of different function through which lubricant may flow in succession and that for each combination one module is constructed as a volumetric flow meter (2).

2. System according to Claim 1, characterised by a connection plate (6), which forms the support for all the selected modules (1, 2, 3) and comprises the connections (7, 8, 10) both for the supply and discharge of lubricant as well as for the modules (1, 2, 3).

3. System according to Claim 1 or 2, characterised by at least one module (3, 21, 24, 33), which is constructed as a two-way flow control valve.

4. System according to one of Claims 1 to 3, characterised by at least one module, which is constructed as a filter block (1).

5. System according to one of Claims 1 to 4, characterised in that for each combination, at least one further module is connected after the volumetric flow meter (2), with respect to the direction of the lubricant flow.

6. System according to one of Claims 3 to 5, characterised in that the two-way flow control valve (3) is constructed as a valve with an exchangeable calibrated orifice (4) for a step by step variation of the orifice cross-section.

7. System according to one of Claims 3 to 5, characterised in that the two-way flow control valve (24) contains a calibrated orifice adjustable step by step.

8. System according to one of Claims 3 to 5, characterised in that the two-way flow control valve (21, 33) contains a calibrated orifice (34) adjustable step by step.

9. System according to one of Claims 3 to 8, characterised in that the two-way flow control valve (21'; 21''; 33'; 33'') comprises a permanently open orifice (104; 4''; 134; 34'').

10. System according to Claim 9, characterised in that the permanently open orifice (104; 134) is constructed to be exchangeable.

11. System according to Claim 9 or 10, characterised in that the permanently open orifice lies in a by-pass to the calibrated orifice (4'; 34') or is integrated in the calibrated orifice (4''; 34'').

12. System according to one of Claims 7 to 11, characterised by a manual (22) or motorised (28, 35) adjusting drive for the calibrated orifice.

13. System according to one of Claims 7 to 12, characterised by a measuring system (43) for determining the orifice position.

14. System according to Claim 12 or 13, characterised in that the motorised adjusting drive is formed by a proportional magnet or an electric servo motor.

15. System according to Claim 14, characterised in that the servo motor is constructed to be self-holding.

16. System according to one of Claims 8 to 15, characterised in that the calibrated orifice adjustable step by step comprises in an orifice body (51) able to be adjusted by translation, an opening (53) with a contour producing a linear dependence of the orifice size on the adjusting displacement.

17. System according to one of Claims 1 to 14, characterised in that the modules constructed as two-way flow control valves (3, 21, 24, 33) have a pressure sensor and a connection (20) for a line transmitting the measured values.

## Revendications

1. Système de commande de débit pour fluides qui comprend un certain nombre voulu d'appareils, en forme de modules (1, 2, 3, 21) et pouvant être traversés par un courant de fluide, sont réunis en une unité ou en un ensemble unitaire, caractérisé en ce qu'il est utilisé pour commander les courants de lubrifiants dans les installations de lubrification, en ce que l'ensemble se compose d'une combinaison donnée de plusieurs modules (1, 2, 3, 21) remplissant différentes fonctions et qui sont traversés successivement par le courant de lubrifiant et en ce que, dans chaque combinaison, l'un des modules remplit les fonctions de compteur de débit volumétrique (2).

2. Système selon la revendication 1, caractérisé en ce qu il comprend une plaque de montage (6) servant de support pour tous les modules (1, 2, 3) sélectionnés et qui comporte tous les raccords (7, 8, 10) tant d'arrivée et de départ du lubrifiant que pour les modules (1, 2, 3).

3. Système selon la revendication 1 ou 2, caractérisé en ce que, l'un, au moins, des modules (3, 21, 24, 33) est conçu pour remplir les fonctions de valve de réglage de débit à deux voies.

4. Système selon l'une quelconque des revendications 1 à 3, caractérisé en ce qu'il comprend, au moins, un module conçu pour remplir les fonctions de bloc de filtrage (1).

5. Système selon l'une quelconque des revendications 1 à 4, caractérisé en ce que dans chaque combinaison, le compteur de débit (2) est suivi, en considérant la direction du courant de lubrifiant, d'au, moins, un autre module.

6. Système selon l'une quelconque des revendications 3 à 5, caractérisé en ce que la valve de réglage de débit à deux voies (3) comporte un obturateur de mesure interchangeable (4) qui permet de faire varier, par échelons, la section libre de ce dernier.

7. Système selon l'une quelconque des revendications 3 à 5, caractérisé en ce que la valve de réglage de débit à deux voies (24) comporte un obturateur de la section libre qui est variable par degrés.

8. Système selon l'une quelconque des revendications 3 à 5, caractérisé en ce que la valve de réglage de débit à deux voies (21, 33) comporte un obturateur de mesure (34) dont la section libre est variable en continu.

9. Système selon l'une quelconque des revendications 3 à 8, caractérisé en ce que la valve de réglage de débit à deux voies (21'; 21", 33', 33") comporte un obturateur ou un diaphragme ouvert en permanence (104; 4"; 134 ; 34").

10. Système selon la revendication 9, caractérisé en ce que l'obturateur ouvert en permanence (104 ; 134) est interchangeable.

11. Système selon la revendication 9 ou 10, caractérisé en ce que l'obturateur ouvert en permance est logé dans un by-pass aboutissant à l'obturateur de mesure (4' ; 34') ou bien fait partie intégrante de l'obturateur de mesure (4" ; 34").

12. Système selon l'une quelconque des revendications 7 à 14, caractérisé en ce qu'il comprend une commande de réglage manuelle (22) ou motorisée (28, 35) de l'obturateur de mesure.

13. Système selon l'une quelconque des revendications 7 à 12, caractérisé par un système de mesure (43) pour déterminer la position de l'obturateur.

14. Système selon la revendication 12 ou 13, caractérisé en ce que le dispositif de réglage motorisé est constitué par un électro-aimant de proportionnalité ou par un moteur électrique de réglage ou de positionnement.

15. Système selon la revendication 14, caractérisé en ce que le moteur de réglage ou de positionnement est un moteur à auto-blocage.

16. Système selon l'une quelconque des revendications 8 à 15, caractérisé en ce que l'obturateur de mesure réglable en continu est monté dans un support pouvant opérer des mouvements de translation (51) et présente une ouverture (55) dont le contour est lié par une fonction linéaire à la longueur de déplacement dudit support.

17. Système selon l'une quelconque des revendications 1 à 14, caractérisé en ce que les modules formant les valves de réglage de débit à deux voies (3, 21, 24, 33) possèdent un capteur de pression et une connexion (20) pour une ligne véhiculant des grandeurs de mesure.
